# EUROPEAN PATENT APPLICATION

(11) **EP 2 489 562 A1**
(43) Date of publication of application: **22.08.2012**
(21) Application number: 12155293.9
(22) Date of filing: 14.02.2012
(51) Int. Cl.: B60T 3/00, B60T 7/12, B60T 7/16, B60T 17/20

(54) **Safety apparatus for controlling a vehicle, particularly for controlling vehicles for children**

(30) Priority: 15.02.2011 IT VR20110033
(71) Applicant: Taioli, Paolo, 37038 Soave (VR) (IT)
(72) Inventor: Taioli, Paolo, 37038 Soave (VR) (IT)
(74) Representative: Modiano, Micaela Nadia

(57) **Abstract**

A safety apparatus for controlling a vehicle, particularly for controlling vehicles for children, comprising an actuation device (2) which is installable on the vehicle (3) and is functionally connected to means (4) for braking the vehicle (3), and a control device (5), which is adapted to interact remotely with the actuation device (2) in order to provide the operation of the aforementioned braking means (4).

## Description

The present invention relates to a safety apparatus for controlling a vehicle, particularly for controlling vehicles for children.

A problem greatly felt by parents is that of keeping their children under constant supervision and at a distance that is not excessive, especially when children are on the road driving vehicles, such as bicycles, tricycles, toy cars or the like, in order to prevent them from encountering possible hazards.

The aim of the present invention is to provide a valid solution to the above mentioned problem, by devising a safety apparatus for controlling a vehicle, particularly for controlling vehicles for children, that makes it possible to prevent children driving a vehicle from straying too far from the persons who are supervising them.

Within this aim, an object of the invention is to provide a safety apparatus that is capable of preventing the children driving a vehicle from straying too far, even when the parents, or the persons who are supervising them, are momentarily inattentive.

Another object of the invention is to provide a safety apparatus that, owing to the peculiar implementation characteristics, is capable of offering the utmost guarantees of reliability in use.

Last but not least, an object of the present invention is to provide a safety apparatus, particularly for controlling vehicles for children, that is very simple in structure and low cost.

This aim and these and other objects which will become better apparent hereinafter are achieved by a safety apparatus for controlling a vehicle, particularly for controlling vehicles for children, according to the invention, which is **characterized in that** it comprises an actuation device which is installable on said vehicle and is functionally connected to means for braking said vehicle, and a control device which is adapted to interact remotely with said actuation device in order to provide the operation of said braking means.

Further characteristics and advantages of the invention will become better apparent from the description of some preferred, but not exclusive, embodiments of the apparatus, according to the invention, which are illustrated by way of non-limiting example in the accompanying drawings wherein:
Figure 1 schematically shows the use of a possible embodiment of the apparatus according to the invention;
Figure 2 is a diagram of the apparatus according to the invention in the embodiment of Figure 1;
Figure 3 is an outline diagram of a second embodiment of the invention;
Figure 4 is a diagram of a third embodiment;
Figure 5 is a diagram of a fourth embodiment of the invention;
Figure 6 is a schematic view of a possible embodiment of the braking means of the vehicle.

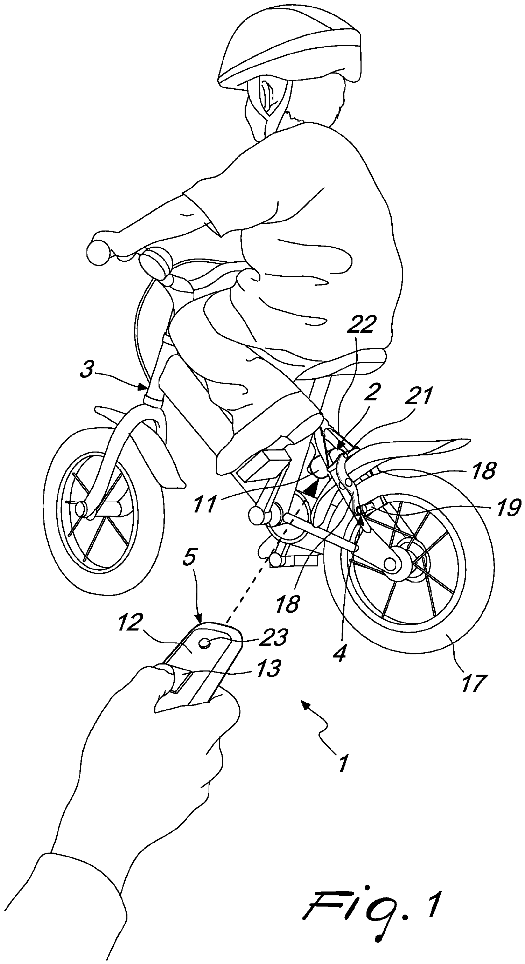

With reference to the figures, the safety apparatus for controlling a vehicle, particularly for controlling vehicles for children, according to the invention, generally designated with the reference numeral 1, comprises an actuation device 2, which can be installed on a vehicle 3, such as, for example, a bicycle for children, as shown in Figure 1, or a tricycle, a toy car or any other vehicle designed particularly for children.

The actuation device 2 is functionally connected to braking means 4 of the vehicle 3, which are preferably constituted by an additional brake, over and above those normally provided on the vehicle 3, while allowing that it could also be constituted by any brake that is normally provided on the vehicle 3.

Also according to the invention, a control device 5 is provided which is adapted to interact remotely with the actuation device 2 in order to provide the operation of the braking means 4 of the vehicle 3.

Conveniently, the control device 5 can be carried by a user, such as, for example, the person who is responsible for supervising the child driving the vehicle 3.

Advantageously, the apparatus according to the invention is provided with monitoring means, which make it possible to detect the exceeding of an alarm threshold, which is constituted, for example, by a preset maximum distance allowed between the vehicle 3 and the control device 5, beyond which it is deemed that the straying of the vehicle 3 from the control device 5 is excessive.

Conveniently, signaling means are also provided, for example of the acoustic, sonorous and/or vibration type, the function of which is to signal the exceeding of such alarm threshold, if such occurs.

Advantageously, the monitoring means comprise means for adjusting the value of the monitored alarm threshold, by way of which it is, for example, possible to increase or decrease, according to requirements, the value of the maximum allowed distance between vehicle 3 and control device 5.

In more detail, the monitoring means are, conveniently, provided by way of means for detecting the distance between the vehicle 3 and the control device 5, which will be described in more detail below, and processing means 6, constituted, for example, by an electronic processor. The processing means 6 are capable of comparing the distance detected by the detection means with the maximum allowed distance between vehicle 3 and control device 5. Conveniently, the data item relating to the maximum allowed distance can be stored in an adapted memory unit and can be varied by way of the above mentioned adjustment means, which can comprise, advantageously, data setting means, such as, for example, a keypad, a knob or the like.

Conveniently, the actuation device 2 is provided with automatic actuation means 7 that are capable of acting on the braking means 4 of the vehicle 3 in order to operate the actuation thereof.

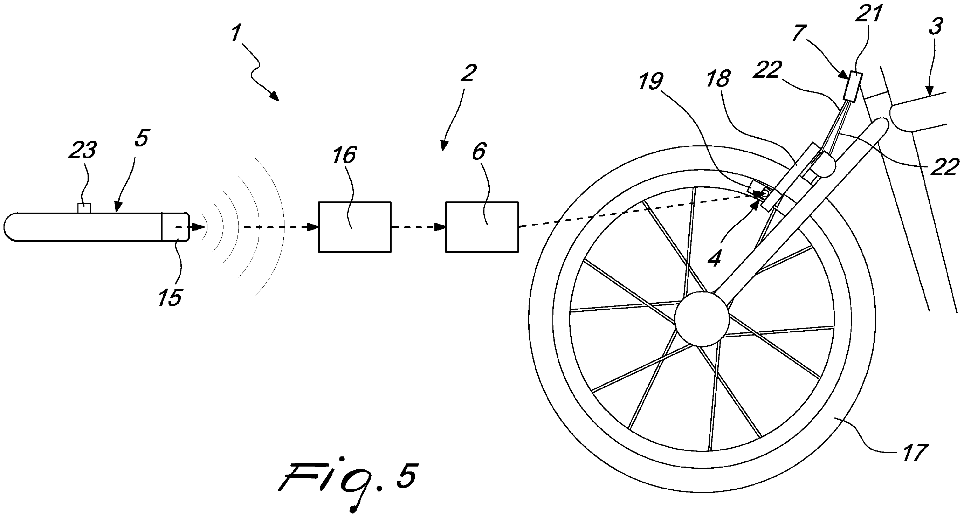

With reference to a first embodiment, shown in Figure 5, the processing means 6 can be associated with the actuation device 2 and be functionally connected to the automatic means 7 of actuation of the braking means 4. In this case, the processing means 6 are adapted to activate the automatic actuation means 7, as a consequence of the detection, by the processing means 6 themselves, of a distance between the control device 5 and the vehicle 3 which exceeds the maximum allowed distance.

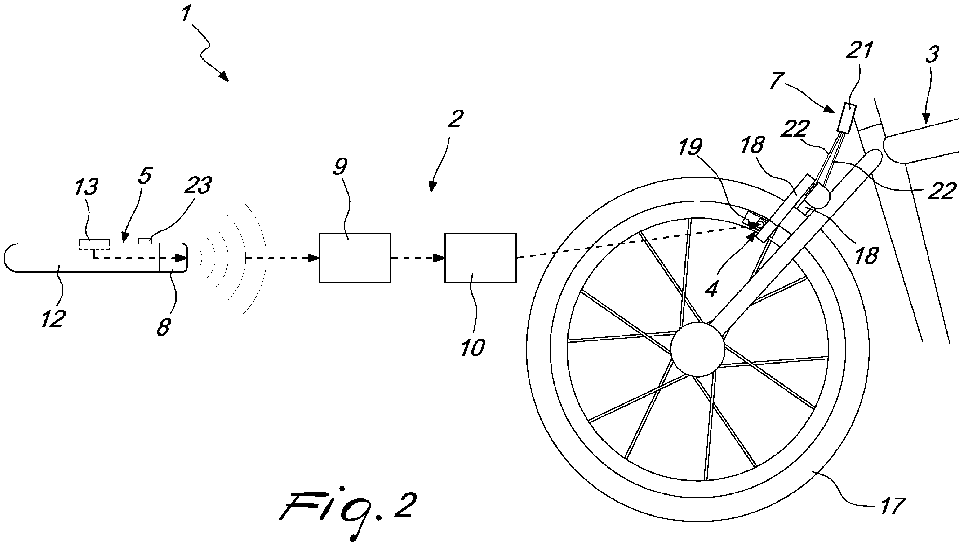

With reference to the embodiments in Figures 2, 3 and 4, the control device 5 is provided with an emitter 8, the function of which is to generate an actuation signal to be sent to the actuation device 2.

In its turn, the actuation device 2 is, conveniently, provided with a receiver 9, which is capable of detecting the actuation signal emitted by the emitter 8, and a controller 10, which is constituted, for example, by an electronic processor, that is functionally connected both to the receiver 9 and to the automatic means 7 for the actuation of the braking means 4.

In particular, the controller 10 activates the actuation means 7, following reception by the receiver 9 of the actuation signal emitted by the emitter 8.

Optionally, the receiver 9, the controller 10 and the automatic actuation means 7 can be accommodated in a single box-like element 11, which is supported by the frame of the vehicle 3 and which also defines, conveniently, within it, an accommodation compartment for the power supply batteries of the actuation device 2.

Advantageously, the emitter 8 can be, in its turn, incorporated in a supporting body 12, which can be gripped by the user of the control device 5.

Also accommodated in the supporting body 12, as well as the emitter 8, is, conveniently, a battery power supply assembly for the control device 5.

It should be noted that the actuation signal can be constituted by a radio signal or by an infrared signal or by any other type of signal that can be remotely transmitted.

Advantageously, the actuation device 2 can, moreover, be provided with a generator of sound signals, or light signals, which can optionally be disabled, which enables the user of the actuation device 5 to easily identify the position of the vehicle 3.

With reference to Figures 1, 2 and 4, the control device 5 can be provided with manually operable means for the sending, by the emitter 8, of the actuation signal to the receiver 9.

Such manually operable means comprise at least one button 13, which is mounted on the supporting body 12 and is intended to be actuated by the user of the control device 5, when the latter wants to cause the activation of the braking means 4 of the vehicle 3.

It can optionally be provided that the braking means 4 can cause a simple slowing of the vehicle 3 or the definitive stopping thereof, according to the pressure exerted by the user on the button 13.

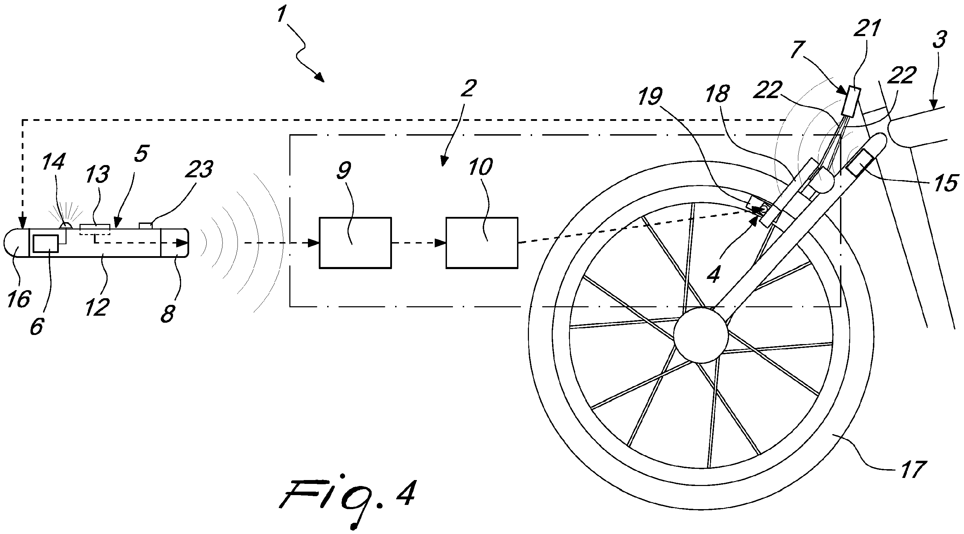

With particular reference to the embodiment of Figure 4, the processing means 6 are, conveniently, associated with the control device 5, while the above mentioned signaling means can comprise at least one signaling device 14, which is constituted, for example, by an indicator light, an acoustic warning and/or a vibration device and which is also associated with the control device 5. More specifically, the processing means 6 are functionally connected to the signaling device 14 and are adapted to activate the signaling device 14, as a consequence of the detection, by the processing means 6, of a distance between the control device 5 and the vehicle 3 which exceeds the maximum allowed distance.

In this manner, the user of the control device 5 can be advised by the signaling device 14 of the exceeding of the maximum allowed distance between the vehicle 3 and the control device 5 and can, thus, subsequently command the actuation of the braking means 4 of the vehicle 3 by way of actuating the button 13.

Optionally, the signaling device 14 can be activated in order to provide the user of the control device 5 with an advance warning signal of the imminent reaching of the maximum allowed distance between the vehicle 3 and the control device 5. In this manner, the user can actuate the button 13 in order to activate the braking means of the vehicle 3 before the actual reaching of the maximum allowed distance. In this case, the value of a warning distance between vehicle 3 and control device 5, which is shorter than the maximum allowed distance, is conveniently stored in the memory unit associated with the processing means 6. In particular, upon the detection by the processing means 6 of the exceeding of the warning distance, the processing means 6 activate the signaling device 14 in order to emit the aforementioned warning signal.

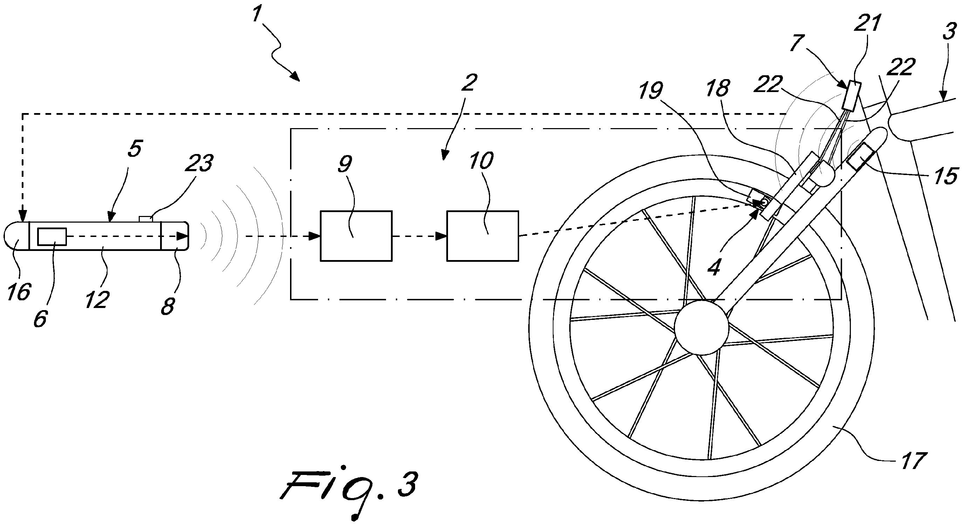

According to another possible embodiment, shown in Figure 3, it is possible for the control device 5 to comprise means for the automatic sending of the actuation signal, by the emitter 8, when a hazardous situation arises, represented, for example, by the exceeding of the aforementioned alarm threshold.

As also shown in Figure 3, in this embodiment, the processing means 6 are associated with the control device 5 and are functionally connected to the emitter 8, so as to automatically activate the emitter 8, as a consequence of the detection, by the processing means 6, of a distance between the control device 5 and the vehicle 3 which exceeds the maximum allowed distance.

According to a preferred embodiment, the aforementioned means for detecting the distance between the vehicle 3 and the control device 5 comprise means 15 of emission of a control signal and corresponding means 16 of receiving such control signal. In this case, the processing means 6 are adapted to determine the distance between the emitter means 15 and the receiver means 16.

In particular, as can be seen in the examples in Figures 3 and 4, the emitter means 15 are associated with the vehicle 3, while the receiver means 16 are associated with the control device 5.

It should be noted that, as shown in the embodiment in Figure 5, the emitter means 15 can also be associated with the control device 5, while the receiver means 16 can be associated with the vehicle 3.

Conveniently, the emitter means 15 emit constantly, or at regular intervals, the control signal, which has an intensity that decreases as the distance from the emitter means 15 increases.

The receiver means 16 are connected to the processing means 6, which perform a comparison between the value of the intensity of the control signal detected by the receiver means 16 with a preset threshold value, stored, conveniently, in the memory unit and corresponding, in particular, to the value of the intensity of the control signal which can be detected at the maximum allowed distance between the vehicle 3 and the control device 5, or at the warning distance between the vehicle 3 and the control device 5.

Preferably, in the various different embodiments, an auxiliary release button 23 can also be provided on the control device 5, which when pressed sends a release signal remotely to the actuation device 2, for example by way of adapted signal emission/reception means or by way of the emitter 8 and the receiver 9, in order to obtain the deactivation of the braking means 4, which were previously activated by the automatic actuation means 7, following manual intervention on the button 13 or following the exceeding of the alarm threshold, according to the embodiment considered.

Conveniently, also in the embodiment of Figure 5, a signaling device can be provided on the control device which is automatically activated in order to signal the exceeding of the maximum allowed distance between vehicle 3 and control device 5 and the consequent actuation of the braking means 4 of the vehicle 3. In this case, the processing means 6 are, advantageously, connected to an additional emitter, not shown, which is adapted to send an activation signal to the signaling device on the control device 5, when the exceeding of the maximum allowed distance between the vehicle 3 and the control device 5 occurs.

For completeness of description, it should be noted that the braking means 4 can, advantageously, comprise, at least in general, one or more brakes, intended to act on at least one corresponding wheel 17 of the vehicle 3.

In particular, the brakes are movable, under the action of means for actuation 7, between an inactive position, in which they permit the rotation of the corresponding wheel 17, and an active position, in which they interfere with the rotation of the corresponding wheel 17, so as to cause the slowing down or stopping thereof.

With reference to the examples shown in the figures, the brakes can be constituted by a pair of braking levers 18, known per se, which are provided , at a free end thereof, with a respective friction skid 19 and are articulated, to each other, about a rotation pin 20, in order to pass from an inoperative condition, in which respective friction skids 19 are disengaged from the wheel 17, to an operative condition, in which the friction skids 19 engage, on opposite sides to each other, the rim of the wheel 17, and vice versa.

With this organization of the braking means 4, the means for actuation 7 can , advantageously, be constituted by a linear actuator 21, such as, for example, a solenoid with an associated piston or a jack, which is connected to one end of at least one command cable 22, capable of acting, in a way that is known per se, at the other end thereof, on the braking levers 18, in order to cause their passage from the inoperative condition to the operative condition.

In a possible alternative embodiment, not shown in the figures, the means for actuation 7 can also be constituted by an electric motor which is functionally connected to an endless screw, interposed between the two braking levers 18, so as to provide, by way of the rotation in one direction of the endless screw, the passage of the braking levers 18 from the inoperative condition to the operative condition and, by way of the rotation in the other direction of the endless screw, the passage of the braking levers 18 from the operative condition to the inoperative condition.

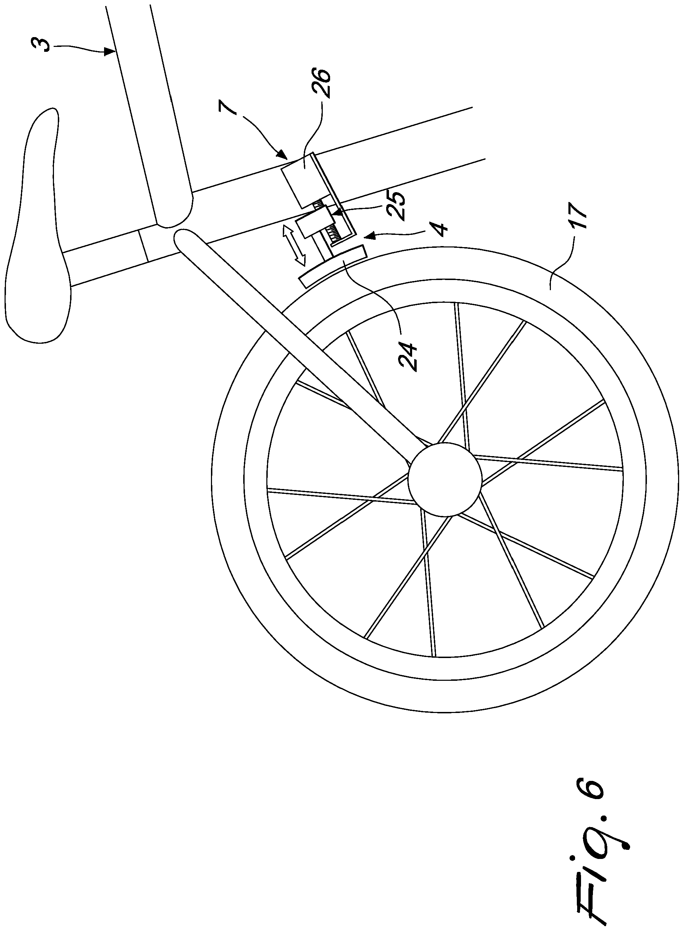

In other embodiments, shown by way of example in Figure 6, the braking means 4 can also be provided by one or more braking skids 24, which are adapted to act on the tire of the wheel 17 and can be actuated in translational motion, between a condition of no contact and a condition of contact with the tire, by the automatic actuation means 7, which in this case can be constituted, for example, by a screw-female thread assembly 25 which is connected to the braking skids 24 and functionally connected to a motor of the electrical type 26.

Alternatively, the braking means 4 can be arranged at the hub or drum of the wheel 17 and, in such case, they can be provided by way of friction disks, friction jaws or brake calipers, not shown, which can be moved toward the drum of the wheel 17, under the thrust of the automatic actuation means 7, so as to provide the braking action on the wheel 17. Also in this case, the automatic actuation means 7 can, conveniently, be provided by way of actuators of the linear type, such as, for example, solenoids acting on movable pistons or actuation assemblies based on a motor and endless screw, or the like.

Operation of the apparatus according to the invention is the following.

With reference to the embodiment in Figures 1 and 2, if the person responsible for supervising the child driving the vehicle 3 judges that the child is in a possible hazardous situation, he or she can press the button 13 on the control device 5, so as to activate the emitter 8 and send the actuation signal of the braking means 4 of the vehicle 3 to the receiver 9 of the actuation device 2, thus obtaining the slowing down or stopping of the vehicle 3.

In particular, as shown schematically in Figure 2, as soon as the receiver 9 receives the actuation signal emitted by the emitter 8, the controller 10 commands the activation of the means for actuation 7, which, as a consequence, bring the braking levers 18 to the operative condition.

In order to deactivate the braking means 4, it is sufficient to press the auxiliary release button 23 on the control device 5, so as to send a release signal to the control device 2, in response to which the controller 10 commands the automatic actuation means 7 to return the braking levers 18 to the inoperative condition.

However, with reference to the embodiment in Figure 3, if the vehicle 3 driven by the child should stray beyond a preset distance from the person responsible for supervising the child, the control device 5 automatically sends the actuation signal to the actuation device 2, so as to obtain the activation of the braking means 4 of the vehicle 3, even if the person responsible for supervising the child should be momentarily inattentive.

More specifically, in this embodiment, when the distance between the vehicle 3 and the control device 5 exceeds the maximum allowed distance, the receiver means 16 detect an intensity of the control signal emitted by the emitter means 15 which is lower than the preset value threshold. In this situation, the processing means 6 activate the emitter 8, so as to send the actuation signal to the receiver 9. As soon as the receiver 9 receives the actuation signal, the controller 10 commands the automatic actuation means 7 of the braking means 4, so as to slow down or stop the vehicle 3.

The deactivation of the braking means 4 can be subsequently performed by actuating the auxiliary release button 23 on the control device 5, once a distance is re-established between vehicle 3 and control device 5 which is less than the maximum allowed distance.

With reference to the embodiment in Figure 4, upon exceeding, by the vehicle 3, of the maximum allowed distance from the control device 5, the processing means 6 activate the signaling device 14 on the control device 5, so as to advise the person who is supervising the child of the excessive straying of the vehicle 3. It is also possible for the signaling device 14 to be, optionally, activated by the processing means 6 in order to provide a warning signal, upon the exceeding of the warning distance between the vehicle 3 and the control device 5.

The sound originating from the sound signal generator of the actuation device 2 enables the person who is supervising the child to identify the position of the vehicle 3. At this point, the person who is supervising the child can actuate the button 13 in order to send, by way of the emitter 8, the actuation signal to the receiver 9, with consequent commanding, by the controller 10, of the automatic means 7 of actuation of the braking means 4 in order to obtain the slowing down or stopping of the vehicle 3.

With reference to the embodiment in Figure 5, if the vehicle 3 should exceed the maximum allowed distance from the control device 5 and the receiver means 16 should, thus, detect an intensity of the control signal emitted by the emitter means 15 which is lower than the preset threshold value, the processing means 6 will command the automatic actuation means 7 to activate the braking means 4 and thus obtain the slowing down or stopping of the vehicle 3.

Also in this embodiment, in order to perform the deactivation of the braking means 4 which were previously activated and thus allow the vehicle 3 to start moving again, all that is needed is to simply actuate the auxiliary release button 23 placed on the control device 5.

From the foregoing it can be seen that the invention achieves the intended aim and objects.

All the characteristics of the invention indicated as advantageous, convenient or similar may also be missing or be substituted by equivalent characteristics.

The individual characteristics shown with reference to general teachings or to specific embodiments can all be present in other embodiments or substitute characteristics in these embodiments.

The invention, thus conceived, is susceptible of numerous modifications and variations, all of which are within the scope of the appended claims.

In practice the materials employed, provided they are compatible with the specific use, as well as the dimensions and shapes, may be any according to requirements.

Moreover, all the details may be substituted by other, technically equivalent elements.

The disclosures in Italian Patent Application No. VR2011A000033, from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A safety apparatus for controlling a vehicle, particularly for controlling vehicles for children, **characterized in that** it comprises an actuation device (2) which is installable on said vehicle (3) and is functionally connected to means (4) for braking said vehicle (3), and a control device (5), which is adapted to interact remotely with said actuation device (2) in order to provide the operation of said braking means (4).

2. The safety apparatus according to claim 1, **characterized in that** it comprises monitoring means which are adapted to detect the exceeding of an alarm threshold.

3. The safety apparatus according to one or more of the preceding claims, **characterized in that** said monitoring means comprise means for signaling that said alarm threshold has been exceeded.

4. The safety apparatus according to one or more of the preceding claims, **characterized in that** said monitoring means comprise means for adjusting the value of said alarm threshold.

5. The safety apparatus according to one or more of the preceding claims, **characterized in that** said alarm threshold is a preset maximum distance allowed between said vehicle (3) and said control device (5).

6. The safety apparatus according to one or more of the preceding claims, **characterized in that** said monitoring means comprise means for detecting the distance between said vehicle (3) and said control device (5), and processing means (6) which are adapted to compare the distance detected by said detection means with said maximum allowed distance.

7. The safety apparatus according to one or more of the preceding claims, **characterized in that** said actuation device (2) comprises automatic means (7) for the operation of said braking means (4).

8. The safety apparatus according to one or more of the preceding claims, **characterized in that** said processing means (6) are associated with said actuation device (2) and are functionally connected to said automatic means (7) for the operation of said braking means (4), said processing means (6) being adapted to activate said automatic actuation means (7), as a consequence of the detection, by said processing means (6), of a distance between said control device (5) and said vehicle (3) that exceeds said maximum allowed distance.

9. The safety apparatus according to one or more of the preceding claims, **characterized in that** said actuation device (2) comprises a signal receiver (9) which is connected to a controller (10), which drives said automatic means (7) for the operation of said braking means (4), said control device (5) comprising an emitter (8) which is adapted to send to said receiver (9) an actuation signal, said controller (10) being adapted to activate said automatic operation means (7), as a consequence of the reception by said receiver (9) of said actuation signal emitted by said emitter (8).

10. The safety apparatus according to one or more of the preceding claims, **characterized in that** said control device (5) comprises manually operable means for sending said actuation signal to said receiver (9).

11. The safety apparatus according to one or more of the preceding claims, **characterized in that** said remote actuation device (5) comprises means for the automatic sending of said actuation signal by said emitter (8) as a consequence of the exceeding of said alarm threshold.

12. The safety apparatus according to one or more of the preceding claims, **characterized in that** said signaling means comprise at least one signaling device (14), which is associated with said control device (5), said processing means (6) being functionally connected to at least one signaling device (14) and being adapted to automatically activate said signaling device (14) as a consequence of the detection, by said processing means (6), of a distance between said control device (5) and said vehicle (3) that exceeds said maximum allowed distance.

13. The safety apparatus according to one or more of the preceding claims, **characterized in that** said processing means (6) are functionally connected to said emitter (8), said processing means (6) being adapted to automatically activate said emitter (8) as a consequence of the detection, by said processing means (6), of a distance between said control device (5) and said vehicle (3) that exceeds said maximum allowed distance.

14. The safety apparatus according to one or more of the preceding claims, **characterized in that** said detection means comprise means (15) for emitting a control signal and corresponding means (16) for receiving said control signal, said processing means (6) being adapted to determine the distance between said emitter means (15) and said receiver means (16).

15. The safety apparatus according to one or more of the preceding claims, **characterized in that** said control signal is emitted constantly, or at regular intervals, by said emitter means (15) and has an intensity that decreases as the distance from said emitter means (15) increases, said processing means (6) being adapted to compare the value of the intensity of said control signal with a preset threshold value.

16. A vehicle for children, **characterized in that** it comprises a safety apparatus according to one or more of the preceding claims.
